(19) Europäisches Patentamt
European Patent Office
Office européen des brevets

(11) Veröffentlichungsnummer: **0 431 545 A2**

(12) # EUROPÄISCHE PATENTANMELDUNG

(21) Anmeldenummer: **90123156.3**

(22) Anmeldetag: **04.12.90**

(51) Int. Cl.5: **A01N 57/20**, //(A01N57/20, 47:36,47:30,43:40,37:40)

(30) Priorität: **08.12.89 DE 3940573**

(43) Veröffentlichungstag der Anmeldung: **12.06.91 Patentblatt 91/24**

(84) Benannte Vertragsstaaten: **BE DE DK ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Bruckschen, Heinz-Dieter**
**Bonner Strasse 25**
**W-8357 Swisttal(DE)**
Erfinder: **Schwerdtle, Friedhelm, Dr.**
**Bergstrasse 17**
**W-6239 Eppstein/Taunus(DE)**
Erfinder: **Wagner, Heinrich, Dr.**
**Benfleetstrasse 29**
**W-5000 Köln(DE)**

(54) **Selektive herbizide Mittel und fungizide Mittel.**

(57) Glufosinate und Analoga wie Bialaphos und Phosalacin sind als nichtselektive Herbizide bekannt. Gegenstand der Erfindung ist jedoch der Einsatz als selektive Herbizide durch eine verringerte Aufwandmenge von 100 bis 600 g/ha, wobei einige Formulierungen dafür besonders geeignet sind. Auch die kombinierte Anwendung eines der genannten Herbizide mit anderen selektiven Pflanzenschutzmittelwirkstoffen; insbesondere selektiven Herbiziden aus der Gruppe Isoproturon, Fluroxypyr, Ioxynil, Bromoxynil und Sulfonylharnstoffen wie Amidosulfuron sind besonders geeignet. Außerdem zeigen sich bei der Anwendung der genannten Mittel auch vorteilhafte fungizide Wirkungen.

EP 0 431 545 A2

## BESCHREIBUNG

Selektive herbizide Mittel und fungizide Mittel

Die Erfindung betrifft das Gebiet des selektiven Einsatzes von Pflanzenschutzmitteln zur Unkrautbekämpfung sowie zur Bekämpfung von Schadpilzen.

Es ist bekannt, daß man Glufosinate-ammonium, d. h. das Ammoniumsalz von 2-Amino-4-(hydroxy-(methyl)phosphinyl)-butansäure (Phcsphinothricin), in einer Formulierung mit 200 g aktiver Substanz pro Liter als Totalherbizid einsetzen kann (siehe "The Pesticide Manual", 8. Auflage, British Crop Protection Council 1987, Seite 448, Substanznr. 6930). Der Einsatz des Herbizids erfolgt in der Regel mit einer Aufwandmenge von 1000 bis 2000 g aktiver Substanz pro Hektar (a.S./ha). Mit dieser Dosis werden nahezu alle Pflanzen, ausgenommen einige Wurzelunkräuter, bekämpft, sofern sie aufgelaufen und ihre grünen Pflanzenteile mit dem Herbizid benetzt wurden. Ein Einsatz des handelsüblich formulierten Herbizids in Baum-, Strauch- und Rebkulturen ist nur dann möglich, wenn deren Blattmasse und grüne Pflanzenteile so entfernt von den zu bekämpfenden Unkräutern angeordnet oder durch mechanische Vorkehrungen abgeschirmt sind, daß diese beim Sprühvorgang nicht getroffen werden.
Bei der Überkopfbehandlung von Kulturen mit handelsüblich formuliertem Glufosinate-ammonium ist eine ausreichende herbizide Wirkung gegen Schadpflanzen bei zugleich tolerierbarer Phytotoxis an der Kulturpflanze nicht zu erreichen. Hierbei bedeutet "tolerierbare Phytotoxis" im speziellen Fall des Glufosinate-ammoniums etwa 10% Phytotoxis im Getreide, bewertet nach üblichen Boniturstandards. Eine negative Ertragsbeeinflussung wird bei Glufosinate-ammonium in der Regel erst bei einer Phytotoxis von 15 bis 20 % festgestellt. Glufosinateammonium ist im Boden und im Pflanzenmaterial gut abbaubar und auch wegen seiner übrigen toxikologischen Eigenschaften ökologisch günstig zu beurteilen. Es bestand deshalb ein Bedürfnis, Glufosinate-ammonium als selektives Herbizid in mono- und dikotylen Kulturen einsetzen zu können.

Es ist bereits bekannt, gentechnologisch modifizierte Pflanzenzellen und daraus Pflanzen zu erzeugen, die eine erhöhte Resistenz gegen Glufosinate, Glufosinate-ammonium und andere Phosphinothricin-Abkömmlinge aufweisen (vgl. EP-A-0 297 618, EP-A-290 986, EP-A-275 957, JP-A-88/251087, Plant Science Band 63(2), 227 - 35 (1989) und jeweils dort zitierte Literatur). Die modifizierten Nutzpflanzen ermöglichen in einzelnen Fällen Aufwandmengen, wie sie beim Einsatz von Glufosinate als Totalherbizid angewendet werden, ohne die Nutzpflanze zu schädigen.

Außerdem ist bereits bekannt, Kultur- und Schadpflanzen in bestimmten Vegetationsperioden mit Glufosinate-ammonium oder dieses enthaltende Herbizidmischungen zu behandeln, um die Unkräuter und -gräser zu kontrollieren, sofern die Regenerationsfähigkeit der Kulturpflanze über die Wurzeln gewährleistet ist (vgl. Chemical Abstracts 105: 148088s, 111: 128921d, 99: 83654j, 101: 185986w, 104: 124915m).

Es wurde nun gefunden, daß man unter Beibehaltung sehr guter Herbizidwirkung gegen Schadpflanzen die Phytotoxis von Glufosinate oder dessen Salzen oder Analoga bei Kulturpflanzen stark vermindern kann, wenn man den Wirkstoff in geeigneten Formulierungen und Wirkstoffkombinationen in verminderter Dosis einsetzt. Dadurch wird der Einsatz zur selektiven Bekämpfung von Unkräutern und Ungräsern insbesondere auch in Kulturen herkömmlicher, nicht auf gentechnischem Wege erhaltener Nutzpflanzen möglich.

Gegenstand der Erfindung ist ein Verfahren zur Bekämpfung von monokotylen und dikotylen Schadpflanzen in Nutzpflanzenkulturen, dadurch gekennzeichnet, daß man Verbindungen der Formel (I)

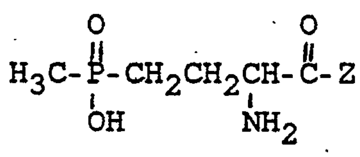

(I)

worin

Z einen Rest der Formel -OH bedeutet oder einen Mono- oder Dipeptidrest, abgeleitet von natürlichen Aminosäuren, insbesondere den Rest $NHCH(CH_3)CONHCH(CH_3)COOH$ oder $NHCH(CH_3)-CONHCH[CH_2CH(CH_3)_2]COOH$, bedeutet,

oder deren Salze mit anorganischen oder organischen Basen, gegebenenfalls in Kombination mit weiteren Wirkstoffen aus der Gruppe selektive Herbizide, Fungizide und Insektizide in einer Dosis von 100 bis 600 g, insbesondere von 100 bis 380 g aktiver Substanz der Formel (I) pro Hektar zugleich auf Schad- und

Nutzpflanzen appliziert.

Die Verbindung der Formel (I), in der Z = OH bedeutet (Ia, Phosphinothricin), und deren Salze, insbesondere auch deren Ammoniumsalz Glufosinate-ammonium (Ib), sind aus "The Pesticide Manual", 8th Edition, British Crop Protection Council, Seite 448 (1987) und dort zitierter Literatur oder u. a. aus der DE-A-27 17 400 bekannt.

Die Verbindung der Formel (I), in der Z den Rest der Formel $NHCH(CH_3)CONHCH(CH_3)COOH$ bedeutet (Ic, Bialaphos), und deren Salze sind aus J. Antibiotics, Bd. 36 (1983),- S. 96 - 98 oder US-A-4,309,208 bekannt.

Die Verbindung der Formel (I), in der Z den Leucylalanylrest bedeutet (Id, Phosphinothricylalanylleucin oder Phosalacin), ist aus J. Antibiotics, Bd. 37 (1984), Seiten 829 - 835 bekannt.

Als Salze der Verbindungen der Formel (I) kommen vor allem Alkalimetall- und Erdalkalimetallsalze, Ammoniumsalze sowie substituierte Ammoniumsalze, die ein- bis vierfach durch Alkyl- und/oder Hydroxyalkylgruppen substituiert sind, in Frage.

Die Verbindungen der Formel (I) enthalten in 2-Stellung zur Carbonylgruppe ein asymmetrisches C-Atom. Die Formel (I) umfaßt alle Stereoisomeren, die aufgrund der Stereochemie an diesem C-Atom und eventuell weiterer im Rest Z enthaltender Asymmetriezentren möglich sind, und deren Gemische. Bevorzugt sind Racemate und reine L-Formen (bezogen auf C-2) oder Gemische, die mehr an L-Form als an D-Form, insbesondere mehr als 80 % L-Form, bezogen auf D- und L-Formen zusammen, enthalten. Besonders bevorzugt ist L-Phosphinothricin (Formel I, Z = OH, L-Form) und dessen Salze, z. B. das Ammoniumsalz.

Eine geeignete Ausführungsform für das erfindungsgemäße Verfahren ist dadurch gekennzeichnet, daß eine Verbindung der genannten Formel (I) in Kombination mit einem oder mehreren selektiven Herbiziden aus den folgenden Gruppen A bis F eingesetzt wird, wobei die im folgenden genannten Herbizide auch jeweils die üblichen Derivate und optisch aktiven Formen einschließen:

A) Herbizide vom Typ der Phenoxyphenoxy- und Heteroaryloxyphenoxycarbonsäure-($C_1$-$C_4$)-alkyl-, ($C_2$-$C_4$)-alkenyl- oder ($C_3$-$C_4$)-alkinylester wie 2-(4-(2,4-Dichlorphenoxy)-phenoxy)-propionsäuremethylester, 2-(4-(4-Brom-2-chlorphenoxy)-phenoxy)-propionsäuremethylester, 2-(4-(4-Trifluormethylphenoxy)-phenoxy)-propionsäuremethylester, 2-(4-(2-Chlor-4-trifluormethylphenoxy)-phenoxy)-propionsäuremethylester, 2-(4-(2,4-Dichlorbenzyl)-phenoxy)-propionsäuremethylester, (R)-2-[4-(6-chloroquinoxalin-2-yloxy)-phenoxy]-propionsäure-2-(isopropylidenaminooxy)-ethylester (Propaquizafop), 4-(4-(4-Trifluormethylphenoxy)-phenoxy)-pent-2-ensäureethylester, 2-(4-(3,5-Dichlorpyridyl-2-oxy)-phenoxy)-propionsäureeethylester, 2-(4-(3,5-Dichlorpyridyl-2-oxy)-phenoxy)-propionsäurepropargylester, (DL)- und (D)-2-(4-(6-Chlorbenzoxazol-2-yloxy)-phenoxy)-propionsäureethylester (DL- und D-Fenoxapropethyl), 2-(4-(6-Chlorbenzthiazol-2-yl-oxy)-phenoxy)-propionsäureethylester, 2-(4-(3-Chlor-5-trifluormethyl-2-pyridyloxy)-phenoxy)-propionsäuremethylester, (R,S)- und (R)-2-(4-(5-Trifluormethyl-2-pyridyloxy)-phenoxy)-propionsäurebutylester (Fluazifop-butyl und Fluazifop-P-butyl), 2-(4-(6-Chlor-2-chinoxalyloxy)-phenoxy)-propionsäureethylester, 2-(4-(6-Fluor-2-chinoxalyloxy)-phenoxy)-propionsäureethylester, 2-(4-(5-Chlor-3-fluorpyridyl-2-oxy)-phenoxy)-propionsäurepropargylester, 2-(4-(6-Chlor-2-chinolyloxy)-phenoxy)-propionsäureethylester, 2-(4-(3,5-Dichlorpyridyl-2-oxy)-phenoxy)-propionsäuretrimethylsilylmethylester, 2-(4-(3-Chlor-5-trifluormethoxy-2-pyridyloxy)-phenoxy)-propionsäureethylester,

B) Chloracetanilid-Herbizide wie N-Methoxymethyl-2,6-diethyl-chloracetanilid, 2-Chlor-N-(2-ethyl-6-methylphenyl)-N-(2-methoxy-1-methylethyl)-acetamid (Metolachlor), N-(3-Methyl-1,2,4-oxdiazol-5-yl-methyl)-chloressigsäure-2,6-dimethylanilid, Butachlor,

C) Thiocarbamate wie S-Ethyl-N,N-dipropylthiocarbamat oder S-Ethyl-N,N-diisobutylthiocarbamat,

D) Cyclohexadion-Derivate wie 2-(N-Ethoxybutyrimidoyl)-5 (2-ethylthiopropyl)-3-hydroxy-2-cyclohexen-1-on, 2-(N-Ethoxybutyrimidoyl)-5-(2-phenylthiopropyl)-3-hydroxy-2-cyclohexen-1-on oder 2-(I-Allyloxyiminbutyl)-4-methoxycarbonyl-5,5-dimethyl-3-oxocyclohexenol, 2-(N-Ethoxypropionamidoyl)-5-mesityl-3-hydroxy-2-cyclohexen-1-on (oder auch als 5-(2,4,6-Trimethylphenyl)-3-hydroxy-2-[1-(Ethoxyimino)-propyl]-cyclohex-2-en-1-on bezeichnet), 2-(N-Ethoxybutyrimidoyl)3-hydroxy-5-(thian-3-yl)-2-cyclohexen-1-on. 2-[I-(Ethoxyimino)-butyl]-3-hydroxy-5-(2H-tetrahydrothiopyran-3-yl)-2-cyclohexen-1-one (BASF 517); (+)-2-[(E)-3-chloroallyloxyiminopropyl]-5-(2-ethylthiopropyl)-3-hydroxycyclohex-2-enone (Clethodim),

E) 3,5-Dihalogen-4-hydroxybenzonitrile, ihre Ester und Salze, wie Bromoxyniloctanoat und Ioxyniloctanoat, Phenylharnstoffderivate wie Monolinuron, Linuron, Isoproturon oder Buturon, Anilinderivate wie Trifluralin, Ethalfluralin, Pendimethylalin Butralin, Benfluralin und Fluchloralin, Benzothiadiazin-4(3H)-on-2,2-dioxide wie Bentazone, Phenoxyphenylcarbonsäureester wie Bifenox, Benzofuranderivate wie Ethofumesate, Pyridyloxyessigsäurederivate wie Fluroxypyr, Phenoxy- oder Pyridyloxyalkylsäurederivate wie 2,4-D, 2,4,5-T, MCPA, Mecoprop, Triclopyr, Phenylimidazolinone wie 2-(4-Isopropyl-4-methyl-5-oxo-2-imidazolin-2-yl)-5-(oder 4)-methylbenzoesäuremethylester und

F) Sulfonylharnstoffe wie Sulfameturon und Sulfometuronmethyl, Metsulfuron und Metsulfuron-methyl, DPX T 6376 (®Ally, ®Gropper, Fa. DuPont), DPX M 6316 (®Harmony, Fa. DuPont), DPX L 5300 (®Granstar, Fa. DuPont), Hoe 075032 (Amidosulfuron, Fa. Hoechst AG) und verwandte Verbindungen aus der Gruppe der N-Alkyl- oder N-Alkoxysulfonyl-aminosulfonyl-N'-(2-pyrimidyl)-harnstoffe.

Die genannten Herbizide sind dem Fachmann bekannt und im Handel erhältlich oder nach üblichen Methoden herstellbar. Zum großen Teil sind sie in "The Pesticide Manual", 8. Auflage 1987, British Crop Protection Council und in "Farm Chemicals Handbook '89" (Meister Publishing Company, Willoughby, Ohio, 1989) und dort zitierter Literatur beschrieben. Amidosulfuron und verwandte Verbindungen sind aus EP-0 131 258 bekannt.

Die optimale Aufwandmenge für Glufosinate bzw. dessen genannte Analoga und gegebenenfalls für die zusätzlichen Wirkstoffe und deren Mengenverhältnis zu Glufosinate bzw. dessen Analoga ist im Einzelfall zu bestimmen, beispielsweise in Vorversuchen mit Hilfe faktorieller Versuchsplanung.

Bevorzugter Gegenstand der Erfindung ist ein Verfahren zur Bekämpfung von monokotylen und dikotylen Schadpflanzen in Nutzpflanzenkulturen, dadurch gekennzeichnet, daß man

a) Glufosinate (Formel (I), Z = OH) oder dessen Salze in Form einer wäßrigen Lösung, die keine oder noch inerte Zusatzstoffe enthält und die keine weiteren Wirkstoffe oder Wirkstoffe aus der Gruppe selektive Herbizide, Fungizide und Insektizide enthält, oder in Form der genannten wäßrigen Lösung in Kombination mit getrennt formulierten weiteren Wirkstoffen aus der Gruppe selektive Herbizide, Insektizide und Fungizide, insbesondere der obengenannten Herbizide der Gruppen A bis F, oder

b) Glufosinate (Formel I, Z = OH) oder dessen Salze in Form einer üblichen Formulierung, die Tenside und andere übliche Formulierungshilfsmittel sowie ein oder mehrere Wirkstoffe aus der Gruppe Isoproturon, Fluroxypyr und dessen Ester, Ioxynil und dessen Ester mit Carbonsäuren, Bromoxynil und dessen Ester mit Carbonsäuren und Sulfonylharnstoffen aus der Gruppe der gegebenenfalls substituierten N-Alkyl- oder N-Alkoxysulfonylaminosulfonyl-N'-(2-pyrimidyl)-harnstoffe enthält,

zugleich auf Schad- und Nutzpflanzen in einer Aufwandmenge von 100 bis 600 g, insbesondere 100 bis 380 g aktiver Substanz pro Hektar nach üblichen Methoden appliziert.

Die optimale Aufwandmenge für Glufosinate und Derivate, insbesondere Glufosinate-ammonium, hängt von Witterungs- und Bodenverhältnissen, zu bekämpfenden Schadpflanzen, den Nutzpflanzen und den eventuellen Kombinationswirkstoffen ab und kann im Vorversuchen bestimmt werden.

Von besonderem Interesse ist das erfindungsgemäße Verfahren, bei dem Glufosinate-ammonium als alleiniger Wirkstoff in Form einer wäßrigen Lösung, die gegebenenfalls noch inerte Zusatzstoffe enthalten kann, in einer Aufwandmenge von 150 bis 600 g a.S./ha, vorzugsweise 150 bis 380 g a.S./ha, insbesondere 200 bis 300 g a.S./ha, appliziert wird. Dabei sind als inerte Zusatzstoffe solche zu verstehen, welche die Phytotoxität von Glufosinate-ammonium an den Kulturpflanzen nicht wesentlich begünstigen.

Von besonderem Interesse sind auch erfindungsgemäße Verfahren, worin als Wirkstoffe Glufosinate-ammonium in Form der genannten wäßrigen Lösung in Kombination mit einem oder mehreren selektiven Herbiziden aus der Gruppe der N-Phenylharnstoffe, wie Isoproturon, der 2-Pyridyloxyalkansäureester, wie Fluroxypyr und dessen Alkylester, der Sulfonylharnstoffe, wie der N-Alkyl- oder N-Alkoxysulfonylaminosulfonyl-N'-(2-pyrimidinyl)-harnstoffe, der Hydroxy- oder Alkanoyloxybenzonitrile, wie Ioxynil und Bromoxynil und deren Alkansäureester, oder mit fungizid oder insektizid wirksamen Stoffen, z. B. Insektiziden auf Naturölbasis wie ®Telmion (Hoechst AG), eingesetzt werden.

Besonders geeignete Wirkstoffe zur Kombination mit in üblicher Weise formuliertem Glufosinate und dessen Salzen, z. B. dem handelsüblich formulierten Glufosinate-ammonium (®Basta, Hoechst AG), welches neben dem Wirkstoff und Wasser noch Lösungsvermittler (organisches Lösungsmittel) und Netzmittel enthält, sind Isoproturon, Fluroxypyrisooctyl, Ioxynil-octanoat, Bromoxynil-octanoat, aus EP-A-0 131 258 bekannte Sulfonylharnstoff-Herbizide wie 3-(4,6-Dimethoxypyrimidin-2-yl)-1-(N-methyl-N-methylsulfonylaminosulfonyl)-harnstoff sowie das Insektizid ®Telmion auf Rapsölbasis. In diesen Kombinationen läßt sich eine Safener-Wirkung und/oder synergistische Wirkungssteigerung feststellen, die zu einer reduzierten Phytotoxizität von Glufosinate und dessen Salzen an Kulturpflanzen bei zugleich guter herbizider Wirkung an Schadpflanzen führt.

In den Kombinationen mit selektiven Herbiziden sind Aufwandmengen von 100 bis 300 g a.S./ha Glufosinateammonium bevorzugt.

Insbesondere sind bei Wirkstoffkombinationen

100 bis 300 g a.S./ha Glufosinate-ammonium und
800 bis 2 000 g a.S./ha Isoproturon oder
100 bis 200 g a.S./ha Fluroxypyr oder
200 bis 800 g a.S./ha Ioxynil oder
200 bis 800 g a.S./ha Bromoxynil
bevorzugt. Besonders bevorzugt sind die genannten erfindungsgemäßen Verfahren, in denen Glufosinate-ammonium als wäßrige Lösung mit oder ohne die bevorzugt genannten selektiven Herbizide eingesetzt wird.

Die erfindungsgemäß eingesetzten Wirkstoffe weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden teilweise durch die Wirkstoffe gut erfaßt. Die Anwendung der Wirkstoffe nach dem Auflaufen der Schadpflanzen ist bevorzugt. Im einzelnen seien beispielhaft einige Vertreter der mono- und dikotylen Unkrautflora genannt, die durch die erfindungsgemäß eingesetzten Wirkstoffe kontrolliert werden können, ohne daß durch die Nennung eine Beschränkung auf bestimmte Arten erfolgen soll.

Auf der Seite der monokotylen Unkrautarten werden z.B. Alopecurus, Apes, Echinochloa, Bromusarten, wie Bromus erectus, aus der annuellen Gruppe gut erfaßt.

Bei dikotylen Unkrautarten erstreckt sich das Wirkungsspektrum auf Arten wie z. B. Veronica, Lamium, Stellaria, Amaranthus, Sinapis, Ipomoea, Matricaria, Abutilon und Sida auf der annuellen Seite sowie Convolvulus, Cirsium, Galium, Viola und Artemisia bei den perennierenden Unkräutern.

Unter den spezifischen Kulturbedingungen im Reis vorkommende Unkräuter wie z.B. Sagittaria, Alisma, Eleocharis, Scirpus und Cyperus werden von den erfindungsgemäßen Wirkstoffen ebenfalls hervorragend bekämpft.

Bei Applikation der Wirkstoffe auf die grünen Pflanzenteile im Nachauflaufverfahren tritt sehr rasch nach der Behandlung ein drastischer Wachstumsstop ein und die Unkrautpflanzen bleiben in dem zum Applikationszeitpunkt vorhandenen Wachstumsstadium stehen und sterben nach einer gewissen Zeit ganz ab, so daß auf diese Weise eine für die Kulturpflanzen schädliche Unkrautkurrenz sehr früh und nachhaltig beseitigt wird.

Obgleich die erfindungsgemäß eingesetzten Wirkstoffe eine ausgezeichnete herbizide Aktivität gegenüber mono- und dikotylen Unkräutern aufweisen, werden Kulturpflanzen wirtschaftlich bedeutender Kulturen wie z.B. Weizen, Gerste, Roggen, Triticale, Hafer, Erbsen, Kartoffel, Lein, Brassica-Arten wie z. B. Raps, sowie Reis, Mais, Zuckerrübe, Baumwolle, Soja und verschiedenste Zierpflanzenkulturen nur unwesentlich oder gar nicht geschädigt. Die erfindungsgemäß eingesetzten Mittel eignen sich aus diesen Gründen sehr gut zur selektiven Bekämpfung von unerwünschtem Pflanzenwuchs in landwirtschaftlichen Nutzpflanzungen.

Die erfindungsgemäß eingesetzten Wirkstoffe der Formel (I), wie beispielsweise Glufosinate-ammonium, weisen neben den selektiven herbiziden Wirkungen vorteilhafte fungizide Wirkungen vor allem gegen pathogene Fungi wie Erysiphe graminis, Puccinia hordei, Puccinia recondita, Pyrenophera teres und Pseudocercosporella herpotirchoides bei den Kulturpflanzen auf. So zeigten die mit Glufosinate-ammonium behandelten Parzellen einen deutlich verminderten Befall mit vorgenannten Schaderregern. Die vorteilhafte fungizide Wirkung wird in manchen Fällen dadurch bewirkt, daß die Behandlung der Pflanzen mit erfindungsgemäßen Mitteln zu einem beschleunigten Absterben der befallenen Pflanzenteile führen und infolge der dadurch bewirkten Verminderung des pathogenen Potentials zur Gesundung des Bestandes beitragen. In anderen Fällen sterben die Schadpilze nach der Behandlung ab, ohne daß die Wirtspflanze geschädigt wird.

Gegenstand der Erfindung ist deshalb auch die Verwendung der Verbindungen der Formel (I) als Fungizid bzw. ein Verfahren zur Bekämpfung von Schadpilzen auf Kulturpflanzen durch Applikation von Verbindungen der Formel (I) in einer Dosis von 100 bis 600 g, insbesondere 100 bis 380 g aktiver Substanz pro Hektar auf die Pflanzen.

Darüber hinaus wurde gefunden, daß die Kombination von Glufosinate-ammonium und dessen Analoga mit den anderen Wirkstoffen auch zu einer unerwarteten Verbesserung der Wirkungsgeschwindigkeit führt, was sich besonders günstig bei im Einzelversuch langsam wirkenden Herbiziden, wie z. B. Sulfonylharnstoffen, auswirkt.

Wird Glufosinate oder dessen Salz in Form einer wäßrigen Lösung eingesetzt, so kann diese noch Zusatzstoffe enthalten, die die Phytotoxizität an den Kulturpflanzen nicht über das tolerierbare Maß von 10 % Schaden nach üblichen Boniturstandards erhöht. Solche Zusatzstoffe können beispielsweise Inertmaterialien wie Füll- und Trägerstoffe, Puffersubstanzen, Lösungsmittel für - versprühbare Lösungen, Salze, Düngemittel und ähnliches sein. Bei der Anwendung werden konzentrierte wäßrige Lösungen in üblicher Weise auf die Anwendungskonzentration verdünnt und auf die Pflanzen oder die Anbaufläche aufgebracht.

Bei kombinierter Anwendung mit weiteren Wirkstoffen können diese in der wäßrigen Lösung enthalten sein oder in getrennter Formulierung angewendet werden. Bei getrennter Formulierung können die weiteren Wirkstoffe meist in den dafür üblichen Formulierungen angewendet werden, ohne daß die Phytotoxizität von Glufosinate und dessen Salzen erhöht wird. In Fällen, wo eine ungünstige hohe Menge an tensidischen Hilfsmitteln zusammen mit den formulierten, zusätzlichen Wirkstoffen auf die Pflanze aufgebracht werden, ist eine Beeinträchtigung der Selektivität von Glufosinate und dessen Salzen möglich; solche Fälle sind zu vermeiden.

Wird Glufosinate oder dessen Salze in Form einer üblichen Formulierung eingesetzt, die noch die genannten weiteren Wirkstoffe mit Safener-Effekt enthalten kann, so sind eine große Zahl von üblichen Formulierungen möglich.

Die erfindungsgemäß einsetzbaren Wirkstoffe können dann beispielsweise in Form von Spritzpulvern, emulgierbaren Konzentraten, versprühbaren Lösungen, Stäubemitteln, Emulsionen, Dispersionen auf Öl- oder Wasserbasis, Suspoemulsionen, Beizmitteln, Boden- und Streugranulaten, wasserdispergierbaren Granulaten oder anderen Granulaten, ULV-Formulierungen, Mikrokapseln oder Wachsen in den üblichen Zubereitungen angewendet werden.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen, "Intruduction to Clay Colloid Chemistry"; 2nd Ed., J. Wiley & Sons, N.Y.; C. Marsden, "Solvents Guide', 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Spritzpulver (benetzbare Pulver) sind in Wasser gleichmäßig dispergierbare Präparate, die neben Wirkstoffen außer einem Verdünnungs- oder Inertstoff noch Netzmittel, z.B. polyoxethylierte Alkylphenole, polyoxethylierte Fettalkohole oder -Fettamine, Fettalkoholpolyglykolethersulfate, Alkan- oder Alkylbenzolsulfonate und Dispergiermittel, z.B. ligninsulfonsaures Natrium, 2,2'-dinaphthylmethan-6,6'-disulfonsaures Natrium, dibutylnaphthalin-sulfonsaures Natrium oder auch oleylmethyltaurinsaures Natrium enthalten.

Emulgierbare Konzentrate werden durch Auflösen der Wirkstoffe in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen der Wirkstoffe mit fein verteilten festen Stoffen, z.B. Talkum, natürlichen Tonen, wie Kaolin, Bentonit und Pyrophyllit, oder Diatomeenerde. Boden- bzw. Streu-Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe. Die Konzentrationen der Wirkstoffe können in den Formulierungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 95 Gew.-%, insbesondere 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben können die genannten Wirkstofformulierungen mit Safener-Effekt gegebenenfalls die jeweils üblichen Haft-, Netz-, Dispergier-, Emulgier-, Penetrations-, Lösungsmittel, Füll- oder Trägerstoffe enthalten.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen der Formel (I).

Gegenstand der Erfindung sind auch herbizide Mittel der obengenannten Art, in denen Glufosinate oder dessen Salze oder Analoga, insbesondere Glufosinate-ammonium, mit einem oder mehreren selektiven Herbiziden aus der Gruppe Isoproturon, Fluroxypyr und dessen Alkylester, Ioxynil und Bromoxynil und deren Ester mit Alkancarbonsäuren enthalten ist.

Mit den folgenden Beispielen wird die Erfindung erläutert, ohne auf diese Beispiele beschränkt zu sein.

## A. Formulierungsbeispiele

a) Eine wäßrige Lösung wurde erhalten aus
600 g Glufosinate-ammonium und
1000 g Wasser.

b) Ein Stäubmittel wird erhalten, indem man 10 Gew.-Teile einer erfindungsgemäßen Wirkstoffkombination und 90 Gew.-Teile Talkum oder Inertstoff mischt und in einer Schlagmühle zerkleinert.

c) Ein in Wasser leicht dispergierbares, benetzbares Pulver wird erhalten, indem man 25 Gewichtsteile einer erfindungsgemäßen Wirkstoffkombination, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

d) Ein in Wasser leicht dispergierbares Dispersionskonzentrat wird erhalten, indem man 20 Gewichtsteile einer erfindungsgemäßen Wirkstoffkombination mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277° C) mischt und in einer Reibkugelmühle auf eine Feinheit von unter 5 Mikron vermahlt.

e) Ein emulgierbares Konzentrat wird erhalten aus 15 Gew.-Teilen einer erfindungsgemäßen Wirkstoffkombination, 75 Gew.-Teilen Cyclohexanon als Lösemittel und 10 Gew.-Teilen oxethyliertes Nonylphenol als Emulgator.

f) Ein in Wasser dispergierbares Granulat wird erhalten, indem man

| | | |
|---|---|---|
| 75 | Gew.-Teile | einer erfindungsgemäßen Wirkstoffkombination, |
| 10 | " | ligninsulfonsaures Calcium, |
| 5 | " | Natriumlaurylsulfat, |
| 3 | " | Polyvinylalkohol und |
| 7 | " | Kaolin |

mischt, auf einer Stiftmühle mahlt und das Pulver in einem Wirbelbett durch Aufsprühen von Wasser als Granulierflüssigkeit granuliert.

g) Ein in Wasser dispergierbares Granulat wird auch erhalten, indem man

| | | |
|---|---|---|
| 25 | Gew.-Teile | einer erfindungsgemäßen Wirkstoffkombination, |
| 5 | " | 2,2'-dinaphthylmethan-6,6'-disulfonsaures Natrium, |
| 2 | " | oleoylmethyltaurinsaures Natrium, |
| 1 | Gew.-Teil | Polyvinylalkohol, |
| 17 | Gew.-Teile | Calciumcarbonat und |
| 50 | " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

**B. Anwendungsbeispiele**

**Beispiel 1**

In Feldversuchen wurde Sommergerste vom Dreiblattstadium bis zur Bestockung mit einer wäßrigen Lösung von Glufosinate-ammonium sowie in parallelen Versuchen mit Kombinationen handelsüblicher Formulierungen von Glufosinate-ammonium und ®Starane (Fluroxypyr-isooctyl, Dow Chemical) bzw. ®Telmion (Insektizid auf Rapsölbasis, Hoechst AG) bzw. ®Genapol LRO (Fettalkoholdiethylenglykolethersulfat, Hoechst AG) und zum Vergleich alleine mit der handelsüblichen Formulierung von Glufosinate-ammonium (®Basta, Hoechst AG) in den angegebenen Aufwandmengen mit einer Wasseraufwandmenge von 300 - 400 1/ha behandelt und die phytotoxischen Effekte 10 Tage nach der Applikation nach den üblichen Boniturstandards der BBA (Biologische Bundesanstalt) bewertet. Die Ergebnisse sind in Tabelle 1 zusammengefaßt.

**Tabelle 1**

| Versuch | Herbizides Mittel*) und Formulierung | Menge an Wirkstoffen g a.S./ha | Phytotoxis an Sommergerste 10 Tage nach Applikation (%) |
|---|---|---|---|
| a | Glufos.-SC | 100 | 3 |
| b | Glufos.-SC | 200 | 3 |
| c | ®Basta+®Starane 180 | 100 + 135 | 4 |
| d | ®Basta+®Telmion | 100 + 240 | 7 |
| e | ®Basta+®Genapol LRO | 100 + 1 600 | 32 |
| f | ®Basta | 100 | 9 |
| g | ®Basta | 200 | 28 |

*) Glufos.-SC = konzentrierte wäßrige Lösung von Glufosinate-ammonium mit 600 g/l Wirkstoff.

®Basta = handelsübliche Formulierung mit 200 g a.S./l Glufosinate-ammonium, enthält auch organisches Lösungsmittel, Netzmittel und Wasser.

®Starane 180 = handelsübliche Formulierung von Fluoroxypyr-isooctyl mit 180 g a.S./l.

®Telmion = handelsübliche Akarizidformulierung (enthält 80 % Rapsöl).

®Genapol LRO = $C_{12}$-$C_{14}$-Fettalkoholdiethylenglykolether-sulfat-Natrium, 80 %ig in Wasser.

Ergebnis: Die Wirkstoffe und Wirkstoffkombinationen der Versuche a bis d zeigen eine wesentlich geringere Phytotoxizität an der Kulturpflanze als die handelsübliche Glufosinate-ammonium-Formulierung ®Basta allein oder in Kombination mit dem Tensid ®Genapol LRO, das für Formulierungszwecke verwendet wird.

**Beispiel 2**

Analog Beispiel 1 wurde in Feldversuchen die Wirkung der wäßrigen Lösung von Glufosinate-ammonium mit dem in handelsüblicher Weise formulierten Wirkstoff an Hafer verglichen (vgl. Tabelle 2).

**Tabelle 2**

| Wirkstoff Formulierung | Menge g a.S./ha | Phytotoxis in Hafer 10 Tage nach Applikation (%) |
|---|---|---|
| Glufosinate-ammonium-SC*) | 100 | 1 |
| " | 200 | 2 |
| ®Basta*) | 100 | 7 |
| ®Basta*) | 200 | 20 |

*) Abkürzungen: siehe Tabelle 1

Ergebnis: Die wäßrige Lösung von Glufosinate-ammonium zeigt eine überraschend geringere Phytotoxizität im Vergleich zur handelsüblichen Formulierung ®Basta, die als Totalherbizid verwendet wird.

**Beispiel 3**

In Feldversuchen wurden Parzellen mit Sommergerste, die mit verschiedenen Unkräutern und -gräsern durchsetzt waren, mit einer wäßrigen Lösung von Glufosinate-ammonium behandelt. Nach 10 Tagen wurde die Wirkung auf die Unkräuter und -gräser sowie Phytotoxizität an der Kulturpflanze im Vergleich zu unbehandelten Kontrollen bonitiert. Die Ergebnisse sind in Tabelle 3 zusammengefaßt.

**Tabelle 3** Wirkung von Glufosinate-ammonium-SC

| Pflanze[1] | Glufos.-SC[2] Menge (g a.S./ha) | | |
|---|---|---|---|
| | 200 | 400 | 600 |
| VERPE | 99 | 99 | 99 |
| MATCH | 86 | 99 | 99 |
| GAELA | 90 | 92 | 95 |
| POLAM | 37 | 90 | 95 |
| POLCO | 30 | 67 | 87 |
| LAMPU | 43 | 70 | 87 |
| GALAP | 20 | 27 | 50 |
| CHEAL | 20 | 37 | 50 |
| HORDI | 2 | 3 | 3 |

In der Tabelle bedeuten:

1) Pflanzen:

VERPE = Veronica persica poir, Persischer Ehrenpreis

MATCH = Matricaria chamomilla, Echte Kamille

GAELA = Galeopsis Ladanum, Ackerhohlzahn

POLAM = Polygonum amphibium, Sumpfknöterich

POLCO = Polygonum convulvulus, Windenknöterich

LAMPU = Lamium purpureum, Rote Taubnessel

GALAP = Galium aparine, Klettenlabkraut

CHEAL = Chenopodium album l., Weißer Gänsefuß

HORDI = Hordeum distichum, Sommergerste

2) siehe Abkürzungen zu Tabelle 1

Ergebnis: Bei der Aufwandmenge von 200 bis 600 g a.S./ha werden ein breites Spektrum wirtschaftlich wichtiger Schadpflanzen bekämpft, während die Phytotoxizität an der Kulturpflanze zu vernachlässigen ist.

**Beispiel 4**

In Feldversuchen wurden Parzellen mit Gerste, die mit verschiedenen Unkräutern und Ungräsern durchsetzt waren, mit einer wäßrigen Lösung von Glufosinate-ammonium und in Vergleich dazu mit der handelsüblichen Formulierung des Wirkstoffs (®Basta) behandelt. Zehn Tage nach Applikation wurde die Wirkung im Vergleich zu unbehandelten Kontrollen bonitiert (siehe Tabelle 4).

Tabelle 4

| Pflanze*) | Menge (g a.S./ha) an Glufos.-SC | | Menge (g a.S./ha) an ®Basta | |
|---|---|---|---|---|
| | 400 | 600 | 200 | 300 |
| MATCH | 99 | 99 | 81 | 90 |
| GALAP | 30 | 50 | 32 | 58 |
| Gerste | 1-2 | 1-2 | 14 | 25 |

*) In der Tabelle bedeuten:

MATCH = Matricaria chamomilla, Echte Kamille
GALAP = Galium aparine, Klettenlabkraut
Glufos.-SC = siehe Legende zu Tabelle 1
®Basta = " " " " "

Ergebnis: Die im Getreide einsetzbaren Dosierungen von Glufosinate-ammonium in Form der wäßrigen Lösung haben bei vergleichbarer Wirkung mit Dosierungen in Form von ®Basta wesentlich geringere Phytotoxizität an der Kulturpflanze.

**Beispiel 5**

Analog Beispiel 3 wurde die Wirkung von ®Certrol 40 (40 %ige handelsübliche Formulierung von Ioxynil-octanoat) mit Kombinationen aus Glufosinate-ammonium-SC bzw. ®Basta und ®Certrol 40 gegen Unkräuter und Ungräser in Sommergerste verglichen. Die Ergebnisse sind in Tabelle 5 zusammengefaßt.

**Tabelle 5**

| Pflanze[1)] | Wirkstoffe und Menge ®Basta[2)] + ®Certrol 40 | Glufos.-SC[3)] +®Certrol 40 | | [4)] ®Certrol 40 | |
|---|---|---|---|---|---|
| | 100 + 280 | 200+280 | (200+560) | 280 | (560) |
| POLAM | 80 | 99 | (99) | 70 | (83) |
| CHEAL | 83 | 96 | (99) | 77 | (93) |
| POLCO | 93 | 95 | (99) | 93 | (95) |
| LAMPU | 93 | 95 | (92) | 90 | (57) |
| GALAP | 80 | 87 | (92) | 70 | (83) |
| VERPE | 99 | 99 | (99) | 99 | (88) |
| MATCH | 93 | 99 | (99) | 73 | (95) |
| GAELA | 67 | 92 | (70) | 57 | (60) |
| HORDI | 3 - 5 | 0 - 1 | | 0 - 1 | |

1) Abkürzungen siehe Legende zu Tabelle 3
2) ®Basta, 100 g a.S./ha + ®Certrol 40, 280 g Ioxyniloctanoat pro ha
3) Glufosinate-ammonium-SC, 200 g a.S./ha + 280 g (bzw. 560 g) a.S./ha Ioxynil-octanoat,
4) ®Certrol 40, 280 (bzw. 560) g a.S./ha Ioxynil-octanoat als 40 %ige Formulierung mit 514 g/l Wirkstoff.

Ergebnis: Die Kombination von Glufosinate-ammonium in Form des SC oder von ®Basta mit ®Certrol 40 zeigt eine Verbesserung der Wirkung bzw. des Wirkungsspektrums bei tolerierbarer Phytotoxizität.

**Beispiel 6**

Analog Beispiel 5 wurde die Wirkung der wäßrigen Lösung von Glufosinate-ammonium bzw. der handelsüblichen Formulierung von Glufosinate-ammonium in Kombination mit Fluroxypyrisoctyl (®Starane) geprüft (vgl. Tabelle 6).

**Tabelle 6**

| Pflanze[1)] | Wirkung (%) 22 Tage nach Applikation von Glufos.-SC[2)] +®Starane[3)] | ®Basta[4)] +®Starane[3)] | ®Starane[3)] |
|---|---|---|---|
| POLAM | 95 | 88 | 70 |
| CHEAL | 73 | 57 | 13 |
| MATCH | 99 | 99 | 47 |
| VERPE | 95 | 77 | 40 |
| POLCO | 90 | 95 | 70 |
| LAMPU | 92 | 93 | 90 |
| GALAP | 99 | 99 | 99 |
| GAELA | 95 | 95 | 92 |
| HORDI | 0 - 1 | 3 - 5 | 0 - 1 |

1) Abkürzungen siehe Legende zu Tabelle 3
2) 200 9 a.S./ha Glufosinate-ammonium als wäßrige Lösung
3) 135 g a.S./ha Fluroxypyr-isooctyl als handelsübliche Formulierung
4) 100 g a.S./ha Glufosinate-ammonium als handelsübliche Formulierung ®Basta

Ergebnis: Durch Anwendung einer Kombination von Glufosinateammonium mit Fluroxypyr-isooctyl wird die herbizide Wirkung gegen Schadpflanzen gegenüber Fluroxypyr-isooctyl wesentlich verbessert, ohne daß die phytotoxische Wirkung an der Kulturpflanze erhöht oder wesentlich erhöht wird. Die Anwendung von Glufosinate-ammonium als wäßrige Lösung ist gegenüber der von dem formulierten Wirkstoff diesbezüglich noch günstiger zu beurteilen.

**Beispiel 7**

Analog Beispiel 5 wurde die Wirkung der Kombination von handelsüblich formulierten Glufosinate-ammonium (®Basta) mit Bromoxyniloctanoat (®Certrol B) bzw. dem Sulfonylharnstoff-Herbizid 3-(4,6-Dimethoxypyrimidin-2-yl)-1-(N-methyl-N-methylsulfonyl-aminosulfonyl)-harnstoff (DPSH) in sommergerste geprüft (vgl. Tabelle 7).

**Tabelle 7**

| Pflanze[1)] | Wirkung (%) 22 Tage nach Applikation von ®Basta[2)] + ®Certrol B[3)] | [3)] ®Certrol B | ®Basta[2)] +DPSH[4)] | [4)] DPSH |
|---|---|---|---|---|
| GALAP | 90 | 50 | 79 | 70 |
| MYOAR | 95 | 89 | 90 | 80 |
| STEME | 99 | 67 | 77 | 40 |
| MATCH | 96 | 74 | 74 | 58 |
| LAPCO | 96 | 90 | 90 | 77 |
| VERPE | 95 | 50 | 70 | 10 |
| POLCO | 96 | 53 | 67 | 47 |
| LAMPU | 80 | 53 | 13 | 7 |
| VIOTR | 53 | 25 | 31 | 12 |
| HORDI | 3 - 5 | 0 | 2 - 4 | 0 |

1) Abkürzungen siehe Tabellen 3 und 4,
2) 100 g a.S./ha Glufosinate-ammonium als handelsübliche Formulierung ®Basta,
3) 560 g a.S./ha Bromoxynil-octanoat als handelsübliche Formulierung Certrol B mit 235 g/l Wirkstoff,
4) 20 g a.S./ha 3-(4,6-Dimethoxypyrimidin-2-yl)-1-(N-methyl-N-methylsulfonyl-aminosulfonyl)-harnstoff (common name: Amidosulfuron).

Ergebnis: Die Wirkstoffkombinationen mit Glufosinateammonium in üblicher Formulierung zeigen wesentlich bessere, breite Wirkung gegen die Schadpflanzen, wobei die Phytotoxizität an der Kulturpflanze in einem tolerierbaren Bereich bleibt.

**Beispiel 8**

Analog Beispiel 7 wurden Zweier- und Dreier-Kombinationen von Wirkstoffen in parallelen Versuchen auf ihre Eignung zur selektiven Bekämpfung von Schadpflanzen geprüft (vgl. Tabelle 8).

Tabelle 8

| Pflanze1) | Wirkung (%) 22 Tage nach Applikation von | | | | | |
|---|---|---|---|---|---|---|
| | Glufos.-SC2) + DPSH3) | Glufos.-SC2) + DPSH3) + Certrol B4) | DPSH3) | Glufos.-SC2) + Starane5) | Glufos.-SC2) + Starane5) + Arelon6) | Starane5) |
| POLAM | 83 | 99 | 40 | 93 | 99 | 87 |
| CHEAL | 30 | 99 | 40 | 77 | 95 | 33 |
| POLCO | 88 | 99 | 50 | 90 | 95 | 90 |
| LAMPU | 78 | 93 | 0 | 90 | 90 | 80 |
| GALAP | 95 | 95 | 90 | 99 | 99 | 95 |
| VERPE | 99 | 98 | 0 | 99 | 99 | 10 |
| MATCH | 80 | 99 | 60 | 88 | 99 | 33 |
| GAELA | 85 | 92 | 60 | 90 | 80 | 80 |
| HORDI | 0 - 1 | 0 - 1 | 0 - 1 | 0 - 1 | 0 - 1 | 0 - 1 |

1) Abkürzungen siehe Legende zu Tabelle 3
2) 200 g a.S./ha Glufosinate-ammonium als wäßrige Lösung
3) siehe Legende zu Tabelle 7, Punkt 4
4) siehe Legende zu Tabelle 7, Punkt 3
5) siehe Legende zu Tabelle 6, Punkt 3
6) 750 g a.S./ha Isoproturon als handelsübliche Formulierung ®Arelon (Fa. Hoechst AG)

Ergebnis: Die Wirkstoffkombinationen sind sehr gut geeignet zur selektiven Bekämpfung von Schadpflanzen in Nutzpflanzenkulturen

Beispiel 9

Parzellen mit Sommergerste, die mit Bromus erectus (aufrechte Trespe) im Stadium EC 32 - 35 durchsetzt waren, wurden mit 600 g a.S./ha Glufosinate-ammonium als wäßriger Lösung behandelt und 10 Tage nach Applikation bonitiert. Die Ergebnisse zeigten, daß die Trespe hervorragend bekämpft wurde, während an der Sommergerste nur vernachlässigbare phytotoxische Nebenwirkungen erkennbar waren.

Beispiel 10

In Feldversuchen wurden Parzellen von Winterweizen, der teilweise mit Blatt-Mehltau (Erysiphe grominis) befallen war, mit einer wäßrigen Lösung von Glufosinate-ammonium behandelt. Als Vergleich dienten unbehandelte Parzellen sowie mit Standardfungiziden behandelte Parzellen. Die Ergebnisse sind in Tabelle 9 zusammengefaßt.

Tabelle 9 Fungizidwirkung von Glufosinate-ammonium auf Blattmehltau

| Wirkstoff-formulierung | Dosis l/ha | Applikation | % Wirkungsgrad nach 14 Tagen |
|---|---|---|---|
| * Glufos-SC | 0,125 | EC 37 | 71 |
| ** Glufos-SC | 0,250 | EC 37 | 77 |
| ®Matador | 1,000 | EC 37 | 61 |
| ®Desgan | 1,000 | EC 37 | 45 |
| unbehandelt | | | 8 % Befall |

* Es wurden leichte Phytotoxis beobachtet, die mit 5 % bonitiert wurden

** Phytotoxis stieg bis auf 10 % Blattaufhellung an

Glufos-SC = Glufosinate-ammonium mit 600 g/l Wirkstoff

®Matador = handelsübliche Formulierung von 250 g/l Tebuconazol und 125 g/l Triademol

®Desgan = handelsübliche Formulierung einer Wirkstoffmischung von 125 g/l Propiconazol und 295 g/l Pyrazofos

Beispiel 11

Analog Beispiel 10 wurde die fungizide Wirkung von Glufosinate-ammonium auf Blattkrankheiten (Pyrenophoa teres) in Sommergerste getestet (vgl. Tabelle 10).

Tabelle 10 Fungizide Wirkung von Glufosinate auf Pyrenophoa teres

| Produkt | Produktmenge l/ha | Applikation | % Wirkungsgrad nach 14 Tagen |
|---|---|---|---|
| * Glufos-SC | 0,200 | EC 31/32 | 33 |
| ®Desgan | 1,000 | EC 31/32 | 67 |
| ®Corbel | 0,750 | EC 31/32 | 67 |
| unbehandelt | | | 8 % Befall |

* Es traten leichte Blattaufhellungen auf, die mit bis zu 2 % Phytotoxis beurteilt wurden

| | |
|---|---|
| Glufos-SC = | Glufosinate-ammonium mit 600 g/l Wirkstoff |
| ®Desgan = | siehe Tabelle 9 |
| ®Corbel = | handelsübliche Formulierung des systemischen Fungizids Fenpropimorph |

## Ansprüche

1. Verfahren zur Bekämpfung von monokotylen und dikotylen Schadpflanzen in Nutzpflanzenkulturen, dadurch gekennzeichnet, daß man Verbindungen der Formel (1)

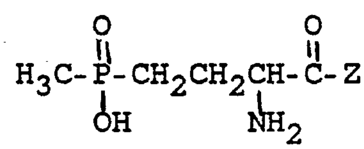

(I)

worin

Z einen Rest der Formel -OH bedeutet oder einen Mono- oder Dipeptidrest, der von natürlichen Aminosäuren abgeleitet ist, bedeutet,

oder deren Salze mit anorganischen oder organischen Basen, gegebenenfalls in Kombination mit weiteren Wirkstoffen aus der Gruppe selektive Herbizide, Fungizide und Insektizide, in einer Dosis von 100 bis 600 g aktiver Substanz pro Hektar zugleich auf Schad- und Nutzpflanzen appliziert.

2. Verfahren nach Anspruch 1, dadurch gekennzeichnet, daß man

a) eine Verbindung der Formel (I), in der Z Hydroxy bedeutet, oder deren Salze in Form einer wäßrigen Lösung, die keine oder noch inerte Zusatzstoffe enthält und die keine weiteren Wirkstoffe oder Wirkstoffe aus der Gruppe selektive Herbizide, Fungizide und Insektizide enthält, oder in Form der genannten wäßrigen Lösung in Kombination mit getrennt formulierten weiteren Wirkstoffen aus der Gruppe selektive Herbizide, Insektizide und Fungizide oder

b) eine Verbindung der Formel (I), in der Z Hydroxy bedeutet, oder deren Salze in Form einer üblichen Formulierung, die Tenside und andere übliche Formulierungshilfsmittel sowie ein oder mehrere Wirkstoffe aus der Gruppe Isoproturon, Fluroxypyr und dessen Ester, Ioxynil und dessen Ester mit Carbonsäuren, Bromoxynil und dessen Ester mit Carbonsäuren und Sulfonylharnstoffen

aus der Gruppe der gegebenenfalls substituierten N-Alkyl- oder N-Alkoxysulfonylaminosulfonyl-N'-(2-pyrimidyl)-harnstoffe enthält,
zugleich auf Schad- und Nutzpflanzen in einer Aufwandmenge von 100 bis 600 g aktiver Substanz pro Hektar nach üblichen Methoden appliziert.

3. Verfahren nach Anspruch 1 oder 2, dadurch gekennzeichnet, daß man Glufosinate-ammonium als alleinigen Wirkstoff in Form einer wäßrigen Lösung in einer Aufwandmenge von 150 - 600 g/ha appliziert.

4. Verfahren nach Anspruch 1 oder 2, dadurch gekennzeichnet, daß man als Wirkstoffe Glufosinateammonium in Form einer wäßrigen Lösung in Kombination mit einem oder mehreren selektiven Herbiziden aus der Gruppe der N-Phenylharnstoffe der 2-Pyridyloxyalkansäureester, der Sulfonylharnstoffe, der Hydroxy- oder Alkanoyloxybenzonitrile, und deren Alkansäureester, oder mit fungizid oder insektizid wirksamen Stoffen, einsetzt.

5. Verfahren nach einem der Ansprüche 1 bis 4, dadurch gekennzeichnet, daß die Kulturpflanzen Weizen, Gerste, Roggen, Hafer, Erbse oder Brassica-Arten sind.

6. Verfahren nach einem der Ansprüche 1 bis 5, dadurch gekennzeichnet, daß die Schadpflanze eine Bromus-Art ist.

7. Selektive herbizide Mittel, dadurch gekennzeichnet, daß sie Verbindungen der Formel (I),

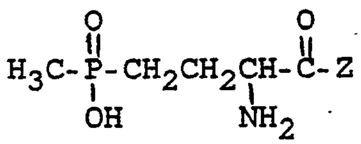

(I)

worin

Z einen Rest der Formel -OH bedeutet oder einen Mono- oder Dipeptidrest, der von natürlichen Aminosäuren abgeleitet ist, bedeutet,

oder deren Salze mit anorganischen oder organischen Basen in Kombination mit einem oder mehreren Herbiziden aus der Gruppe Isoproturon, Fluroxypyr und dessen Alkylester, loxynil und Bromoxynil und deren Ester mit Alkancarbonsäuren enthalten.

8. Herbizide Mittel nach Anspruch 7, dadurch gekennzeichnet, daß die Verbindung der Formel (I) Glufosinate-ammonium ist.

9. Herbizide Mittel nach Anspruch 8, dadurch gekennzeichnet, daß sie, bezogen auf das Gewicht, Glufosinate-ammonium und
   a) Isoproturon im Verhältnis 1:20 bis 1:3,
   b) Fluroxypyr im Verhältnis 1:2 bis 1:0,33,
   c) loxynil im Verhältnis 1:8 bis 1:0,66 oder
   d) Bromoxynil im Verhältnis 1:8 bis 1:0,66 enthalten.

10. Verwendung von in Anspruch 1 definierten Verbindungen der Formel (I) oder deren Kombinationen mit Wirkstoffen aus der Gruppe selektive Herbizide, Fungizide und Insektizide als selektive Herbizide.

11. Verwendung von in Anspruch 1 definierten Verbindungen der Formel (I), oder deren Salze, als Fungizide.

12. Verfahren zur Bekämpfung von Schadpilzen an Kulturpflanzen, dadurch gekennzeichnet, daß man eine der nach Anspruch 1 definierten Verbindungen, oder deren Salze, in einer Aufwandmenge von 100 bis 600 g aktiver Substanz pro Hektar auf die Pflanzen appliziert.